(19) Europäisches Patentamt
European Patent Office
Office européen des brevets

(11) **EP 4 675 910 A1**

(12) **EUROPEAN PATENT APPLICATION**

(43) Date of publication:
**07.01.2026 Bulletin 2026/02**

(21) Application number: **24186231.7**

(22) Date of filing: **03.07.2024**

(51) International Patent Classification (IPC):
*H02P 6/16* (2016.01)   *G01D 5/14* (2006.01)
*G01D 5/26* (2006.01)   *G01D 5/54* (2006.01)
*G01D 5/56* (2006.01)   *G01D 5/58* (2006.01)

(52) Cooperative Patent Classification (CPC):
**H02P 6/16; G01D 5/56;** G01D 5/2454; G01D 5/58

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Gamesa Renewable Energy
A/S
7330 Brande (DK)**

(72) Inventors:
• **Wu, Zhan-Yuan
  S10 4BB Sheffield (GB)**
• **Freire, Nuno Miguel Amaral
  3150-109 Condeixa (PT)**

(74) Representative: **SGRE-Association
Siemens Energy Global GmbH & Co. KG
SE I IM P Intellectual Property
Siemenspromenade 9
91058 Erlangen (DE)**

(54) **ROTOR POSITION DETERMINATION OF AN ELECTRICAL MACHINE**

(57)    It is described a method of determining a rotor position indicating quantity (166, θ), in particular rotor electrical angle, of an electrical machine (100) having a stator (102) and a rotor (103), in particular permanent magnet synchronous generator, in particular of a wind turbine (160), the method comprising: receiving encoder measurement data (168) regarding rotor position from an incremental mechanical encoder (127) installed in order to sense rotor position; receiving Hall effect sensor measurement data (169) from at least one, in particular at least three, Hall effect sensor (120), in particular binary sensors, installed at the stator (102), in order to sense magnetic field change; determining the rotor position indicating quantity (166) based on the encoder measurement data (168) and the Hall effect sensor measurement data (169).

FIG 4

**Description**

Field of invention

The present invention relates to a method and to a corresponding arrangement of determining a rotor position indicating quantity of an electrical machine. Furthermore, the present invention relates to a method and a corresponding controller of controlling an electrical machine, and further relates to an electrical machine and still further relates to a wind turbine.

Art Background

The electrical drive train of a direct-drive wind turbine is required to enable various modes/functions other than power production, the best known being rotor positioning, which must be able to turn the rotor of a wind turbine generator slowly (at a fraction of rpm) and hold it stationary at a target (0 rpm or as close as possible). This may include horizontal single blade mounting with the electrical drive train (eHSBM). eHSBM may require very accurate position and torque control up to the maximum allowable torque.

In a wind turbine application at zero and low speed such as horizontal single blade mounting, a technique has been developed, where an incremental encoder is mounted in touch with the rotor through a rubber wheel, and is used for electrical generator control. As the incremental encoder doesn't know the electrical angle of the generator, and the rubber wheel diameter might change slightly with working conditions, a sensorless HFI (High-Frequency Injection) observer is applied, to provide an initial angle and to correct the gear ratio (which is the ratio between rotor diameter and rubber wheel diameter).

This technique works well in the field tests, however, some improvement may be necessary, for example,

1) The HFI observer may not work reliably for some other types of generators such as fractional-slot concentrated winding machines. A high saliency is desirable for the application of HFI observer, and a concentrated winding machine has much lowered values, in particular at low load, where in some applications such as eHSBM (electric Horizontal Single Blade Mounting) it is essential for the HFI to function well in order to define the initial angle of an incremental encoder.

2) The HFI has a relatively low dynamic, and this may affect the achievable control performance when the encoder is used for position or speed control. In particular, the stiffness in position control may not be as high as desired.

3) The HFI may be affected by the harmonic presence in a generator.

4) The HFI may have a risk of instability, especially when the rotor speed is getting relatively high.

5) A closed-loop PI regulation is needed for the gear ratio correction. This could impose an issue when the rotor speed is very low because of the integral term. Therefore, the operation can only be enabled when the speed is above a threshold.

Thus, there may be a need for a method and a corresponding arrangement of determining a rotor position indicating quantity, there may be a need for a respective control method and controller and further there may be a need for a generator as well as a wind turbine, wherein one or more of the above identified problems are mitigated or even solved or reduced or avoided. In particular, it may be desirable to provide a respective accurate rotor position methodology which may in particular be applied at low or zero rotational speed of the rotor of the electrical machine.

Summary of the Invention

This need may be met by the subject matter according to the independent claims. Advantageous embodiments of the present invention are described by the dependent claims.

According to an embodiment of the present invention it is provided a method of determining a rotor position indicating quantity, in particular rotor angle, of an electrical machine having a stator and a, rotor, in particular permanent magnet synchronous generator, in particular of a wind turbine, the method comprising: receiving encoder measurement data regarding rotor electrical position from an incremental mechanical encoder installed in order to sense relative rotor position; receiving Hall effect sensor measurement data from at least one, in particular at least three, Hall effect sensors, in particular binary sensors, installed at the stator (at known positions), in order to sense magnetic field (and/or magnetic field change); determining the rotor electrical position indicating quantity based on the encoder measurement data and the Hall effect sensor measurement data.

The method may be implemented in software and/or hardware. The method may for example be performed by a control module or a control block of a controller of an electrical machine, in particular a wind turbine controller.

The rotor position indicating quantity may for example relate to or be or correspond to a rotor angle, in particular an electrical rotor angle. An electrical rotor angle may be related to a mechanical rotor angle by a simple proportionality constant comprising or depending on a number of pole pairs as is known in the art. The rotor position indicating quantity may be any quantity from which the electrical rotor position can be derived. The rotor position indicating quantity may thereby encode for the electrical rotor angle.

The wind turbine may be a direct drive wind turbine or a gearbox may be coupled between a hub of the wind turbine and the rotor of the electrical machine.

The encoder may comprise an encoder wheel which is contacting and also driven by a frictional force between an outer or inner (but outside exposed) annular, in particular circular, rotor surface and an outer surface of the encoder wheel, in particular comprising rubber or other elastic material. The encoder outer surface of the encoder wheel may be pressed by for example a spring force against the inner circular surface of the rotor, in particular a surface of a stiffening ring, in particular a brake disc of the rotor.

The measurement data of the Hall effect sensor and/or the encoder may be received as electrical and/or optical and/or wireless signals. The signals may comprise analogue and/or binary signals. The encoder measurement data may in particular include encoder count data relating to a number of steps the encoder passed after a last measurement sample. Each of the Hall effect sensor measurement data in particular may comprise binary data which encode two different Hall effect sensor states, namely a state where a magnetic field is identified or a state in which no magnetic field is identified.

Embodiments may support that three or six or even a larger number of Hall effect sensors are installed at the stator and some or all of the respective Hall effect sensor measurement data are considered for determining the rotor position indicating quantity. The more Hall effect sensors are installed at the stator, the higher the accuracy of the determined rotor position indicating quantity may be, in particular at very low speed or even zero speed of the rotor. The Hall effect sensor may exploit a Hall effect which has been discovered when a magnetic field changes, thereby inducing a current and/or a voltage in a conductor loop, as is known in the art. The in particular three Hall effect sensors may be installed at the stator at known positions, such that a relative electrical angle is for example 60° or 30° or 120° between spatially adjacent Hall effect sensors. The Hall effect sensors may have been calibrated previously, such that for example the Hall effect sensors exactly indicate the true rotor position at a point in time, where a state change occurs, i.e., where for example in a sensor signal a high state switches to a low state or vice versa. The Hall effect sensors may thereby detect when the magnetic field is for example above a threshold or below a threshold, thereby indicating a high state and a low state, but may also detect a magnetic field change.

The method may primarily use the encoder measurement data in order to determine the rotor position. The Hall effect sensor measurement data may preferably or in particular be utilized for determining an initial angle or offset angle and/or for determining a gear ratio associated with the mechanical encoder. Thereby, accurate rotor position data may be determined. The determined rotor position indicating quantity may in particular be utilized for controlling the electrical machine as will be detailed further below.

According to an embodiment of the present invention, determining the rotor position indicating quantity based on the encoder measurement data and Hall effect sensor measurement data comprises: using the Hall effect sensor measurement data: to define an initial angle or offset angle for the encoder; and/or to determine and/or correct a gear ratio for the encoder; wherein the rotor position indicating quantity is calculated based on the encoder measurement data, in particular being a count increment of the encoder between two samplings, the initial angle and the gear ratio.

The incremental encoder may be configured to only detect an increment of the rotor position angle, but may not be configured to determine by its own an absolute rotor position or absolute rotor angle. For the initialization, the Hall effect sensor measurement data may therefore be utilized, which may be applied during standstill, zero rotation speed or even more accurately during movement or rotation of the rotor. The used encoder may at the beginning use a previous gear ratio or a gear ratio as determined from design information or dimensional information regarding the encoder wheel diameter and/or rotor inner surface diameter. However, this previous or predetermined gear ratio may not truly reflect the true gear ratio during the particular application or during performing for example a particular control method. Thus, for accurate positioning for example, the gear ratio may be needed to be more accurate than a previously determined gear ratio. The gear ratio may in particular be determined and/or corrected by acquiring and processing two state changes of at least one Hall effect sensor. The respective rotor position indicating quantity may then be calculated for example according to a mathematical equation which comprises for example the gear ratio and a count increment of the encoder between two samplings. Thereby, the rotor position indicating quantity may be calculated in a simple and reliable and particular accurate manner.

According to an embodiment of the present invention, determining the gear ratio comprises: determining a first position difference between a first encoder based position and a first Hall effect sensor based position related to a first point in time when there is a state change in Hall effect sensors, thereby in particular using a preceding (or default or previously used or determined or corrected) gear ratio (e.g. previously determined based on previous processing of Hall effect measurement data encoder measurement data); determining a second position difference between a second encoder based position and a second Hall effect sensor based position related to a second point in time when there is a state change in Hall effect sensors, thereby in particular using a previous gear ratio; correcting the previous gear ratio, if the first position difference is different from the second position difference.

The method of determining/correcting the gear ratio may be performed in a recursive manner.

The first position difference may be compared with the second position difference. If the two differences are different or have different values, this may indicate that the previously utilized gear ratio is erroneous and does not reflect the true gear ratio. If the first position difference equals substantially to the second position difference, the previous gear ratio may be considered as the true gear ratio and correction may not be necessary.

According to an embodiment of the present invention, determining the gear ratio further comprises: calculating a position difference change between the second position difference and the first position difference; determining a gear ratio correction term based on the position difference change, wherein the gear ratio correction term is in particular determined as quotient between the position difference change and an expected angle step of the Hall effect sensor position at a Hall effect sensor state change; calculating a corrected gear ratio based on a previous gear ratio, in particular used for determining the first position difference and the second position difference, and the gear ratio correction term, wherein the corrected gear ratio is in particular calculated as a product of the (parameterised) default gear ratio multiplied with a sum of one and the gear ratio correction term.

If the position difference change is different from zero it may indicate that the previous gear ratio used does not reflect the true gear ratio and correction may be required. The gear ratio correction term may then enable to correct the previous gear ratio in order to obtain the true or more accurate gear ratio. Using the corrected or true gear ratio thereby, the rotor position indicating quantity may be calculated based on the encoder measurement data to a higher accuracy.

According to an embodiment of the present invention, at the first and/or second point in time a state change of the Hall effect sensor occurs, wherein in particular a state change is associated with or occurs at a known rotor position.

When a state change occurs in the Hall effect sensor, the Hall effect sensor may thereby indicate a true electrical rotor position to a very high accuracy. Thereby, the first and/or second point in time of state change(s) may advantageously be exploited for reading off the true rotor position from the Hall effect sensor. Those position values may be used for correcting and/or determining the gear ratio of the mechanical encoder, as well as to initialise the encoder angle in case of need.

According to an embodiment of the present invention, the incremental encoder is mounted on the stator and has an encoder wheel outer surface in contact with and driven by a circular inner surface of the rotor, the encoder wheel outer surface in particular being in contact with and driven by a stiffening ring, in particular brake disc, of the rotor.

The encoder wheel outer surface may be provided for example with an at least partially elastic or resilient material, such as rubber, which furthermore may provide an appropriate friction between or with respect to the circular inner surface of the rotor. Thus, when the rotor rotates, there may substantially be no slip between the movement of the encoder wheel and the rotor. The encoder wheel outer surface may be pressed by for example a spring force to the inner surface of the rotor.

The stiffening ring may for example be mounted at a rotor house axial end. The rotor house may be configured substantially as a cylinder wall of a circular cylinder. The stiffening ring may function as a brake disc thereby providing the function of being able to decelerate the rotor if necessary. In other embodiments, the stiffening ring does not necessarily provide a function as a brake disc. In still other embodiments, the encoder outer wheel surface may not be in contact with a stiffening ring but may be directly in contact for example with the rotor house, substantially configured as a cylinder wall.

The stiffening ring, however, may, according to embodiments of the present invention, provide rigidity and stability of the rotor and may provide substantially an exact circular shape. Thereby, the method may be improved.

According to an embodiment of the present invention, the gear ratio indicates a ratio between an encoder wheel outer surface circumference and a circumference of an annular surface of the rotor, in particular stiffening ring of the rotor, with which the encoder wheel outer surface is in contact.

The gear ratio may also indicate a ratio between a respective radius of the encoder wheel outer surface and the radius of the annular surface of the rotor. The method may dynamically determine and/or correct the gear ratio based on continuously performing a method as indicated or described above regarding determining/correcting the gear ratio. Thus, any change (for example, from wear) which may occur at the encoder wheel outer surface may be accounted or corrected for.

According to an embodiment of the present invention, plural axially spaced apart radially extending cooling ducts are provided between axially spaced apart laminations of stator.

The stator may be configured or composed of plural axially spaced apart laminations each having a yoke portion and plural tooth portions. The laminations may comprise layers of ferromagnetic highly permeable material. The plural layers may be electrically isolated from each other. The stator may be configured as a complete circumference stator or may be composed of plural stator segments each stator segment for example spanning a particular angle range, for example 30°, 45°, 60° or a different number of degrees. The plural stator segments assembled together may form a complete circumference.

Between the laminations which are spaced apart in the axial direction radially extending cooling ducts may be formed which may be utilized for guiding cooling fluid or medium therethrough, for example air, and to cool the stator during operation. Advantageously, in some of the cooling ducts, one or more Hall effect sensors may be installed using particular installing equipment, e.g. holder partially inserted in cooling duct. Furthermore, thereby, cooling may be enabled.

According to an embodiment of the present invention, the Hall effect sensor data include binary data which switch at each state change of the Hall effect sensor and/or three of more Hall effect sensors are installed at least partly within or at stator cooling ducts, to have phase shift of 30, 60 or 120 electrical degrees and/or wherein at least one Hall effect sensor is installed using a holder or bracket at least partially inserted into a radial cooling duct within the stator.

For example, a Hall effect sensor may be provided substantially at a tip portion of a holder or a bracket. The holder or bracket may be inserted (e.g. from an inner side of the stator) radially outwards through and into one of the cooling ducts or a portion of the radial cooling duct. Thereby, the tip end portion where the Hall effect sensor is arranged at the holder or bracket may then be arranged close to an air gap between the stator and the rotor in order to sense for example a magnetic field of a permanent magnet mounted on the inner side of the outer rotor. The installed Hall effect sensors may only marginally interfere with cooling performance, since they may only block a very small fraction of the cooling ducts.

According to an embodiment of the present invention, the method is performed: during position control; or during speed control; or during torque control; and/or at low speed, in particular between 0 and 1 rpm, in particular relating to blade mounting and/or demounting.

During position control, a target position may be compared to an actual position and the respective position error may be supplied to a control module which may output a setting signal in order to reduce the positional error. Torque control may be applied or performed in an analogous manner. Thereby, in particular the method may advantageously support mounting and/or demounting methods or methods for preparing mounting and/or demounting of a rotor blade.

According to an embodiment of the present invention it is provided a method of controlling an electrical machine having a stator and a rotor, in particular permanent magnet synchronous generator, in particular of a wind turbine, the method comprising: perform a method of determining a rotor position indicating quantity according to any one of the preceding embodiments; controlling the machine based on determined rotor position indicating quantity, in particular performing rotor positioning applying position, speed, and/or torque control.

The improved rotational position may enable to improve also the controlling of the electrical machine.

It should be understood, that features, individually or in any combination, disclosed, described, applied or provided for a method of determining a rotor position indicating quantity, may also, individually or in any combination applied or provided for an arrangement for determining a rotor position indicating quantity, according to embodiments of the present invention and vice versa.

According to an embodiment of the present invention it is provided an arrangement for determining a rotor position indicating quantity, in particular rotor angle, of an electrical machine having a stator and a rotor, in particular permanent magnet synchronous generator, in particular of a wind turbine, the arrangement comprising: an incremental mechanical encoder installed in order to sense relative rotor position; at least one, in particular at least three, Hall effect sensors, in particular binary sensors, installed at the stator, in order to sense magnetic field (and/or magnetic field change); an input port adapted: to receive encoder measurement data regarding rotor position from the incremental mechanical encoder; to receive Hall effect sensor measurement data from the Hall effect sensor; a processor adapted to determine the rotor position indicating quantity based on the encoder measurement data and the Hall effect sensor measurement data.

The arrangement may be configured to carry out a method according to one of the above-described embodiments.

According to an embodiment of the present invention it is provided a controller for controlling an electrical machine having a stator and a rotor, in particular permanent magnet synchronous generator, in particular of a wind turbine, the controller comprising: an arrangement for determining a rotor position indicating quantity according to the preceding embodiment; a control module adapted to control the machine based on determined rotor position indicating quantity, in particular performing rotor positioning applying position and/or speed and/or torque control.

According to an embodiment of the present invention it is provided an electrical machine, in particular permanent magnet synchronous generator, in particular of a wind turbine, comprising: a stator; a rotor; and controller according to the preceding embodiment.

According to an embodiment of the present invention it is provided a wind turbine, comprising: a hub having plural rotor blades mounted thereon; an electrical machine according to the preceding embodiment, wherein the rotor is coupled to the hub.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a portion of an electrical machine according to an embodiment of the present invention in a sectional view along an axial direction;

Fig. 2 shows an outer rotor and an encoder wheel in accordance with an exemplary embodiment;

Fig. 3 shows an encoder assembly in accordance with an exemplary embodiment;

Fig. 4 illustrates a wind turbine according to an embodiment of the present invention comprising an electrical machine and control according to an embodiment of the present invention;

Fig. 5 illustrates a correction methodology for correcting a gear ratio of a mechanical encoder according to an embodiment of the present invention; and

Fig. 6 schematically illustrates a method of controlling an electrical machine according to an embodiment of the present invention.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

Embodiments of the invention relate to a control method for position and/or torque control at low and zero speed for wind turbines employing permanent magnet synchronous generators, in particular, an application for wind turbine single blade mounting, where a brake disc mounted incremental encoder and a set of digital Hall effect sensors are involved. In comparison with the conventional shaft installed encoder, this solution can have much higher resolution in machine electrical angle measurement, to meet the aforementioned requirement.

Embodiments of the present invention provide an alternative and improved method for rotor position determination using a set of low-cost digital Hall effect sensors which may be installed close to the generator air gaps (or magnets).

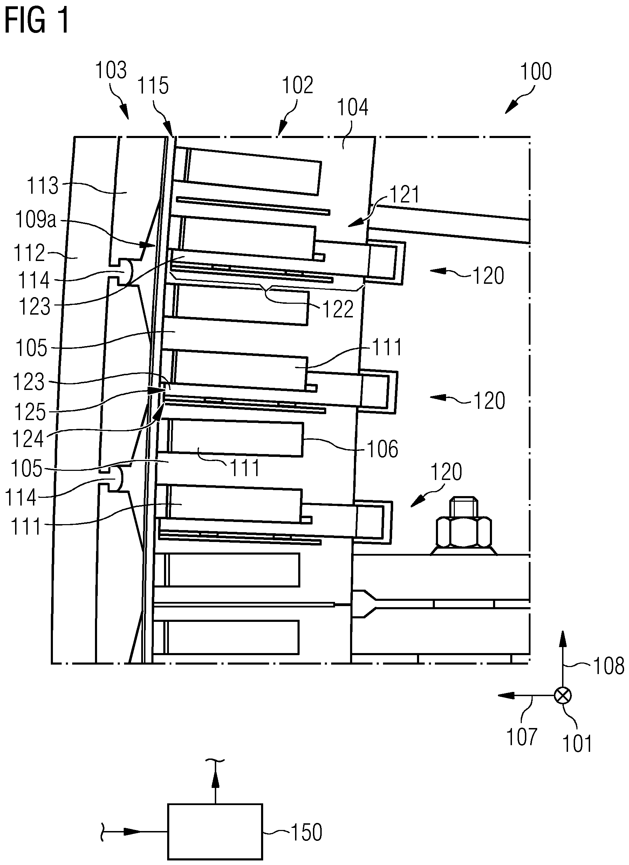

**Fig. 1** schematically illustrates in a cross-sectional view perpendicular to an axial direction 101 an electrical machine 100 according to an embodiment of the present invention in a partial view. In Fig. 1, the radial direction 107 and the circumferential direction 108 are indicated which are both perpendicular to the axial direction 101. The electrical machine 100 comprises a stator 102 and an outer rotor 103, which is rotatably supported relative to the stator 102. The rotor 103 comprises a rotor house 112 having mounted thereon radially inwards protruding permanent magnets 113 which are inserted in holding tracks 114, which extend in the axial direction 101. Between the stator 102 and the rotor 103 an air gap 115 is present, which typically has an extent between 5 mm and 8 mm.

The stator 102 of the electrical machine 100 comprises a stator yoke 104 with plural radially outwards protruding teeth 105 and slots 106 in-between. The teeth 105 are formed by axial tooth segments (obscured in Fig. 1) which are spaced apart in the axial direction 101 thereby forming plural cooling ducts or openings between adjacent tooth segments from which one cooling duct 109a is shown in Fig. 1. The electrical machine or in particular the stator 102 further comprises stator windings 111 which are partially arranged within the slots 106.

The electrical machine 100 illustrated in Fig. 1 further comprises at least one Hall effect sensor system 120 (in particular three Hall effect sensor systems 120 spaced apart in the circumferential direction 108) according to an embodiment of the present invention, which is inserted in one of the cooling openings for example in the cooling opening 109a.

Each of the Hall effect sensor systems 120 of the electrical machine 100 comprises a body 121 including an insertion portion 122 which extends in the longitudinal direction (being co-linear with the radial direction 107), wherein the insertion portion 122 is configured to be reversibly installable within a cooling opening 109a of the stator 102. A Hall effect sensor 123 is provided substantially at the longitudinal end 124 of the insertion portion. The insertion portion 122 has an end surface 125 at the longitudinal end 124. The longitudinal direction of the insertion portion 122 or the body 121 corresponds to the radial direction 107 when the insertion portion 122 is installed within the cooling duct 109a.

The mounting of one or more Hall effect sensors in a generator is illustrated in the Fig. 1 described above. The Hall effect sensors may be mounted on a non-magnetic bracket that can be inserted from the inner side of the stator towards the outer side (air gap or close to the magnets on the rotor). This may allow insulation or replacement of the sensor without direct access to the machine winding or magnets. Three or more Hall effect sensors may be installed at the designed or predetermined locations so that they would have a phase-shift of 30, 60 or 120 electrical degrees.

The electrical machine 100 illustrated in Fig. 1 further comprises a controller 150 according to an embodiment of the present invention comprising an arrangement of determining rotor position according to an embodiment of the present invention which will be described in more detail below.

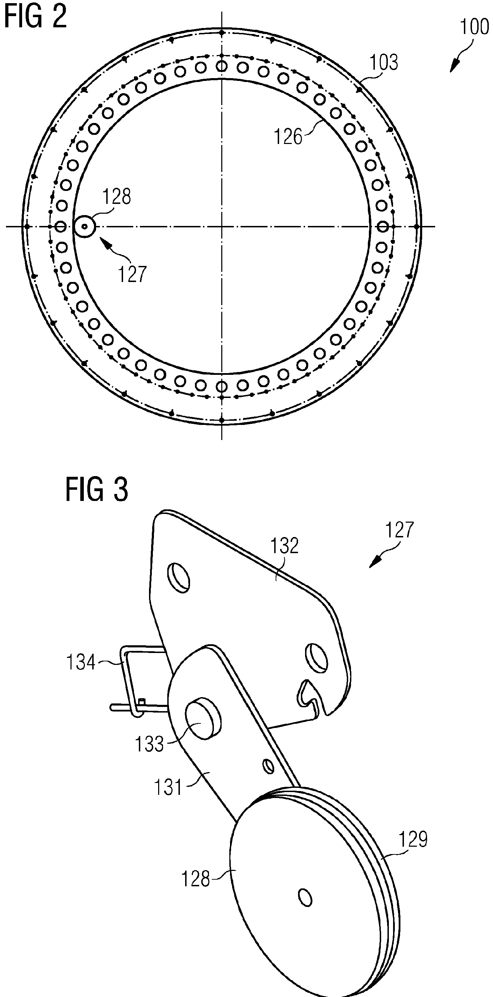

Fig. 2 illustrates the rotor 103 as seen along the axial direction. The rotor 103 has an inner surface 126 which is in the illustrated embodiment a part of a rotor brake disc. The electrical machine 100 partially illustrated in Fig. 2 further comprises an incremental mechanical encoder 127 which is installed at a (not illustrated) stator and which comprises an encoder wheel 128. An outer surface of the encoder wheel 128 of the encoder 127 is pressed onto and contacts the inner surface 126 of the rotor 103, in order to sense rotor rotation.

Fig. 3 shows the encoder 127 in accordance with an exemplary embodiment. The encoder 127 comprises the encoder wheel 128 having a circumferential surface 129 for contacting an opposing surface, such as the inner surface 126 of the rotor 103 illustrated in Fig. 2. The circumferential surface 129 preferably comprises rubber or a similar elastic material. The encoder wheel 128 is rotatably mounted on an encoder arm 131 which is pivotably coupled to encoder mounting bracket 132 via a joint 133. The encoder 127 further comprises a spring arrangement 134 which is arranged to bias the circumferential surface 129 of the encoder wheel 128 against the opposing surface (for example the inner surface 126 of the braking disc of the rotor 103).

The encoder mounting bracket 132 is configured to be (permanently or temporarily) mounted to a non-rotating part, such as a stator of an electrical machine in the vicinity of the opposing surface. The encoder 127 comprises appropriate sensors, e.g., magnetic, mechanical and/or optical sensors for detecting rotation of the encoder wheel 128 and correspondingly incrementing/decrementing a counter as known in the art.

An encoder housing may be mounted on the stator of the wind turbine generator with an outer rotor. The encoder axle or encoder wheel outer surface may be in touch with a circular face of the generator rotor, for example a brake disc, or to a wheel mounted on the encoder axle. The encoder may continuously detect rotation of the rotor and thereby relative rotor position. The encoder output may be connected to the turbine/converter controller.

There may be a particular gear ratio between the encoder wheel and the circular face of the generator rotor. The gear ratio may be determined/corrected according to embodiments of the present invention. The encoder may be mounted temporarily during wind turbine installation and temporarily mechanical and signal connections may be made to turbine control systems.

Installation of brake disc mounted rotary incremental encoder may comprise:

1. Encoder housing is mounted on the stator of the WTG generator with a rotor.
2. Encoder axle is in touch with a circular face on the generator rotor through a wheel mounted on the encoder axle.
3. Encoder continuously detects rotation of WTG rotor. Encoder output is connected to turbine/converter controller.
4. The solution is characterized by the gear ratio between the encoder wheel and the circular face on the generator rotor. The gearing is provided by a method of installation with a rubber wheel.
5. Encoder may be mounted temporarily during WTG installation and temporary mechanical and signal connections made to the turbine control system.

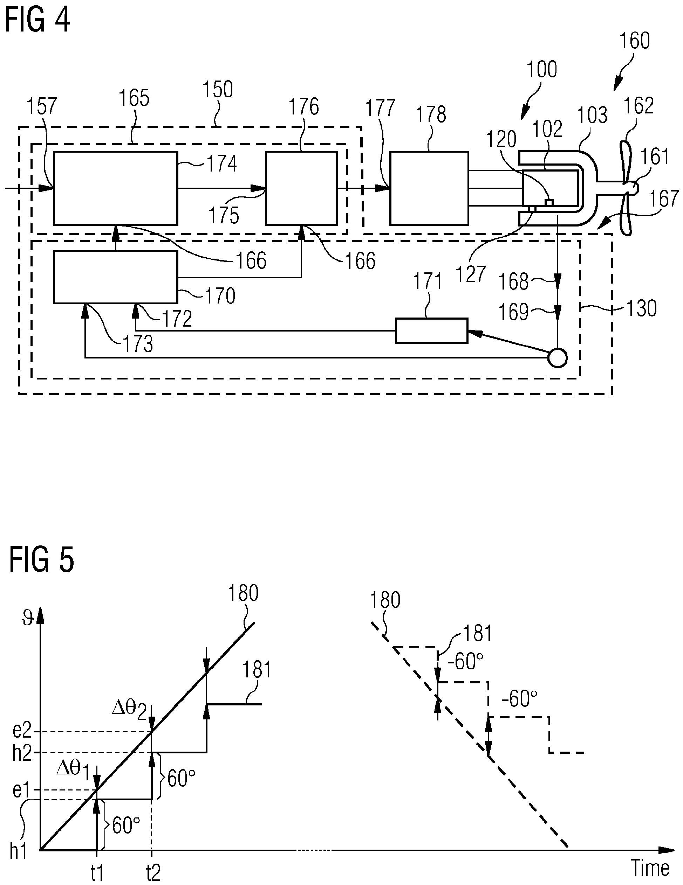

Fig. 4 schematically illustrates a wind turbine 160 according to an embodiment of the present invention. The wind turbine 160 comprises a hub 161 having plural rotor blades 162 mounted. The wind turbine 160 further comprises an electrical machine 100 according to an embodiment of the present invention, of which for example parts are shown in Figs. 1, 2 and 3. The hub 161 is coupled to the rotor 103 of the electrical machine 100. The electrical machine comprises the rotor 103 as well as a stator 102 which has been partly described with reference to Fig. 1 above.

The electrical machine 100 further comprises a controller 150 according to an embodiment of the present invention. The controller 150 for controlling the electrical machine 100 comprises an arrangement 130 for determining a rotor position indicating quantity according to an embodiment of the present invention. The controller 150 further comprises a control module 165 which is adapted to control the machine 100 based on determined rotor position indicating quantity which is indicated by the signal 166 representing a value of the rotor position indicating quantity.

The arrangement 130 for determining the rotor position indicating quantity 166 comprises at least one incremental mechanical encoder 127 (for example illustrated in Fig. 3) which is installed at the stator 102. The arrangement 130 further comprises at least one Hall effect sensor 120 which is installed at the stator 102 in order to sense magnetic field (and/or field change) (for example illustrated in Fig. 2) .

The arrangement 130 further comprises an input port 167 which is adapted to receive encoder measurement data 168 regarding rotor position from the incremental mechanical encoder 127 and which is also adapted to receive Hall effect sensor measurement data 169 from the Hall effect sensor 120. The arrangement further comprises a processor (for example comprising processing portions 170 and 171) which is adapted to determine the rotor position indicating quantity 166 based on the encoder measurement data 168 and the Hall effect sensor measurement data 169. Using a gear ratio the processing module 171 determines a preliminary encoder based rotor position 172. From the Hall effect sensor measurement data 169, a Hall effect sensor based rotor position value 173 is determined.

The position processing module 170 receives both the encoder based preliminary rotor position 172 and the Hall effect sensor based rotor position 173 and then determines the final rotor position indicating quantity 166 based on the at least two input quantities.

The controller 150 uses the Hall effect sensors to define the initial angle for the encoder and also to help to correct the gear ratio. The final encoder angle (for example represented by signal 166 illustrated in Fig. 4) may be responsible for converter and generator control. Thereby, the controller 150 comprises the control module 165 comprising a motion control module 174 which generates based on the position data 166 (and references 157, such as position or torque reference) reference currents 175 which are supplied to a vector control module 176. The vector control module 176 thereby calculates reference voltages 177 which are supplied to a (optional) converter 178 which is connected to the electrical machine 100.

The arrangement 130 is configured to perform a method of determining a rotor position indicating quantity 166 according to an embodiment of the present invention. Thereby, the arrangement 130 receives the encoder measurement data 168 regarding rotor position from the incremental mechanical encoder 127 and further receives the Hall effect sensor measurement data 168 from at least one or in particular at least three Hall effect sensors. Further, based on these two input quantities or signals, at least the arrangement 130 determines the rotor position indicating quantity 166.

The encoder based rotational position 172 may for example be processed or determined according to the following encoder angle processing:

A simple motion control system with encoder measurement implemented in wind turbine 160 in Fig. 4. The Hall-Effect sensors are used to define the initial angle for the encoder, and also to help its gear-ratio correction. The final encoder angle is responsible for converter and generator control.

The Encoder angle processing may include:

At rotor rotation, the encoder count will change. Between two consecutive control samples, the encoder count change can be captured, and used for calculation of change in the generator electrical angle.

$$\Delta EncTheta0 = GenPp * 360 / (EncMaxCount * GR) * \Delta EncInput$$

Where,

GR - gear ratio, which represents the transformation of rotation of brake disc (or rotor) to the rotation of encoder when it's touching the circular face of brake disc

GenPp - gen pole-pairs

EncMaxCount - maximum count of encoder input representing 360 degrees, typically, the value is 40000 if the encoder has 10000 lines.

$\Delta EncInput$ - the count increment of encoder signal between two samplings

The generator electrical angle is then calculated as,

$$EncTheta0 = EncTheta0Last + \Delta EncTheta0$$

where,

EncTheta0Last- the last scan of gen electrical angle from encoder measurement, which can be initialised at the start of calculation by the Hall-Effect sensors, for example.

However, due to uncertainties of the initial angle or position value as well as due to uncertainties about the gear ratio (GR), the preliminary encoder based rotor position 172 may be erroneous and may be needed to be corrected.

Encoder angle initialization may be performed according to the following procedural steps:

The encoder is an incremental type, and its absolute angle with respect to the rotor electrical position needs to be defined from a separate source before its being used for control, which will be the Hall-Effect sensors in this embodiment.

If three Hall effect sensors are used, the angle resolution will be 60deg (or +-30deg) (electrical degrees). This means that when initialised with the Hall effect sensors, the encoder could have an error within (-30, 30)deg, or at a given generator current, the torque delivered can be between 87%~100%. For a certain application such as single blade mounting, where there may not be much margin in converter/generator current capacity, this short of torque may be disadvantageous. Three possible solutions may be supplemented.

1) Instead of three sensors, six sensors can be installed. In this case, the angle error will be in the range of (-15, 15)deg, and the torque can be enhanced to 97%~100%.

2) When the generator current has reached to the maximum, from the encoder initialised angle a slow sweep between (-30, 30deg) could be made as an offset in the generator control angle, until the rotor starts to move.

3) The rotor electrical position measured by encoder in the last run before stop could be stored and used as the encoder initial angle in the next rotor start. For safe operation, this stored initial angle could be checked with the Hall effect sensor angle.

The above is for the case when the rotor is stationary, in particular, in a lock position. If the rotor is allowed to have a free move, or when the rotor is in motion already, the angle measured from the Hall effect sensors at the point of state change will tell the true generator electrical position, and the encoder angle can be initialised accurately.

Determining the gear ratio may comprise to consider the preliminary rotor position values as derived by the encoder (value 172) or the Hall effect sensors (value 173) indicated in Fig. 4.

This embodiment will be described with reference to **Fig. 5** which indicates in a coordinate system having as an abscissa the time and as the ordinate the rotor angle a curve 180 representing the signal amplitude of the encoder based rotor position 172 and further illustrates a step curve 181 representing the Hall effect sensor based rotor position 173. At a first point in time t1 when the state change in Hall effect sensor occurs, a first position difference $\Delta\theta1$ is determined between a first encoder based position e1 and a first Hall effect sensor based position h1, both relating to the first point in time t1. Further, at a second point in time t2 when the state change in Hall effect sensor occurs again, a second position difference $\Delta\theta2$ between a second encoder based position e2 and a second Hall effect sensor based position h2 is calculated both relating to the second point in time t2.

The previous gear ratio is corrected if the first position difference $\Delta\theta1$ is different from the second position difference $\Delta\theta2$. In particular, a position difference change $\Delta\theta\_chg$ is calculated between the second position difference $\Delta\theta2$ and the first position difference $\Delta\theta1$. Then, a gear ratio correction term is determined based on this position difference change and a corrected gear ratio is determined based on the gear ratio correction term and the default gear ratio. It should be noted that at the first and/or second point in time t1, t2, a state change of the Hall effect sensor occurs. At those points in time, thus, the rotor position is accurately defined based on the Hall effect sensor measurement data.

The methodology for encoder gear ratio correction is more detailed below:
At transformation from rotor rotation to encoder rotation, there could be an error in the encoder speed calculation due to tolerances in the wheel diameters, or compression of the rubber tyre, and this error would in turn result in an integrating angle measurement error and thus error in the machine electrical angle. Therefore, the gear ratio needs to be corrected dynamically.

However, with use of the Hall-Effect sensors, the correction of gear-ratio can be much simpler and much faster. This is because that at the state changes of these Hall effect sensors, the machine electrical angle is well defined, even if the harmonics in the flux distribution is considered.

At zero speed, there is no need of GR correction. This is actually automatic handled in the scheme, as a state change in the Hall effect sensors doesn't occur.

When in motion, the Hall effect sensors will change states. Between two consecutive state changes, the GR ratio can be calculated based on angle difference between encoder and Hall effect sensors. For example,

$$GR_{corr} = \frac{\Delta\theta_{chg}}{\theta_{step}}$$

Where,

$$\Delta\theta_{cha} = \Delta\theta_2 - \Delta\theta_1$$

$\Delta\theta$ is the angle difference between encoder and HE, in degree. $\Delta\theta_{cha}$ is the change in angle difference between two consecutive sensor states.

$\theta_{step}$ is the expected step in Hall effect sensor angle at a state change. In the case with three Hall effect sensors, it will be 60 (electrical degrees) in forward rotation, and -60 in reverse rotation (see Fig. 5). In other cases for example with one, two or six Hall effect sensors, the expected step will be different.

The GR correction can then be used for update of the gear ratio (GR),

$$GR = GR_{param} \cdot (1 + GR_{corr})$$

Where $R_{param}$ is a parameter for the default gear-ratio.

This method is more direct and can have a high dynamic, as the correction would be completed within detection of two changes in sensor state (or the next state change after the first). In implementation, a rate limiter may be added to prevent sharp change in the gear-ratio; in addition, the possible a little misalignment in sensor installation locations can be compensated easily in software, for example, by storing the sensor location data In the case of a little sensor location

misalignment, the $\theta_{step}$ shall be calibrated accordingly.

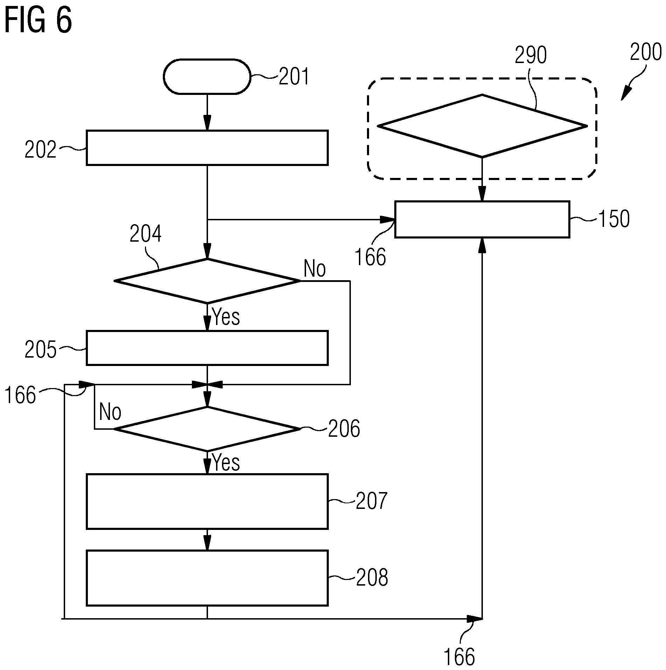

**Fig. 6** schematically illustrates a control method scheme according to an embodiment of the present invention. The method scheme 200 starts in box 201. In a box 202, the encoder initial angle is set to the Hall effect sensor based machine electrical position. The thereby determined encoder angle 166 is supplied to the controller 150 which is configured to control the not illustrated electrical machine. In a decision box 204 it is determined whether there is a state change in the Hall effect sensor based measurement data. If there is a Hall sensor effect state change and if this state change is the first one since the start of operation, the encoder initial angle is set to the Hall effect sensor based angle and the above-mentioned first and second position differences $\Delta\theta1$ and $\Delta\theta2$ are set to zero.

If according to the assessment in box 204 there was not an occurrence of the first Hall state change, in a further decision box 206 (after box 205) it is again checked whether the next Hall effect sensor state change is coming. If this is the case, the first position difference is set to the second position difference. Further, the second position difference is set to the encoder angle diminished by the Hall angle. The expected angle step is also determined based on the detected rotational direction

In the box 208, the calculation of the gear ratio correction is being performed, and the corrected gear ratio is used for calculation of the encoder angle 166 which is supplied to the controller 150 for control.

Continuously, the above gear ratio correction process is looped back to the second decision element 206 as is indicated by the arrows in Fig. 6, and the correct gear ratio for updating of the encoder angle.

In case that the rotor is stationary and generator current is at a limit (decision element 290) angle adjustment is controlled (optionally).

Embodiments of the present invention may provide one or more of the below mentioned advantages (technical features):

- A solution for position and/or torque control at low and zero speed for wind turbines employing permanent magnet synchronous generators. This solution is simple and very low-cost.
- Methods of determination of absolute electrical position of an electrical machine.
- Methods of correction of angle from encoder measurement with a second source of position measurement, i.e., digital Hall effect sensors.
- Techniques of gear ratio (GR) calculation with high dynamics, accuracy and stability.
- The technique is less restricted by the rotor speed.
- A control method easy to integrate with existing control systems.
- A solution applicable to multiple phase electrical machines of PM.
- A solution applicable to DD or geared wind turbines.
- A solution to make concentrated winding (CW) generators compatible with eHSBM

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of determining a rotor position indicating quantity (166, 8), in particular rotor electrical angle, of an electrical machine (100) having a stator (102) and a rotor (103), in particular permanent magnet synchronous generator, in particular of a wind turbine (160), the method comprising:

   receiving encoder measurement data (168) regarding rotor position from an incremental mechanical encoder (127) installed in order to sense relative rotor position;
   receiving Hall effect sensor measurement data (169) from at least one, in particular at least three, Hall effect sensor (120), in particular binary sensors, installed at the stator (102), in order to sense magnetic field;
   determining the rotor position indicating quantity (166) based on the encoder measurement data (168) and the Hall effect sensor measurement data (169).

2. Method according to the preceding claim, wherein determining the rotor position indicating quantity (166) based on the encoder measurement data and Hall effect sensor measurement data comprises:
   using the Hall effect sensor measurement data (168):

   to define an initial angle (EncTheta0Last) for the encoder; and/or
   to determine and/or correct a gear ratio (GR) for the encoder;

wherein the rotor position indicating quantity is calculated based on the encoder measurement data, in particular being a count increment ($\Delta$EncTheta0) of the encoder between two samplings, the initial angle and the gear ratio.

3. Method according to the preceding claim, wherein determining the gear ratio (GR) comprises:

determining a first position difference ($\Delta\theta1$) between a first encoder based position (e1) and a first Hall effect sensor based position (h1) related to a first point in time (t1) when a state change occurs in the Hall effect sensor, thereby in particular using a previous gear ratio;
determining a second position difference ($\Delta\theta2$) between a second encoder based position (e2) and a second Hall effect sensor based position (h2) related to a second point in time (t2) when a further state change occurs in the Hall effect sensor, thereby in particular using a previous gear ratio;
correcting the previous gear ratio, if the first position difference is different from the second position difference.

4. Method according to the preceding claim, wherein determining the gear ratio (GR) further comprises:

calculating a position difference change ($\Delta\theta\_chg$) between the second position difference ($\Delta\theta2$) and the first position difference ($\Delta\theta1$);
determining a gear ratio correction term (GR_corr) based on the position difference change ($\Delta\theta\_chg$), wherein the gear ratio correction term is in particular determined as quotient between the position difference change and an expected step of the Hall effect sensor position at a Hall effect sensor state change;
calculating a corrected gear ratio (GR) based on a default gear ratio (GR_param), in particular used for determining the first position difference and the second position difference, and the gear ratio correction term (GR_corr), wherein the corrected gear ratio is in particular calculated as a product of the default gear ratio multiplied with a sum of one and the gear ratio correction term.

5. Method according to any of the preceding claims 3 or 4, wherein at the first and/or second point in time (t1, t2) a state change of the Hall effect sensor (120) occurs, wherein in particular a state change is associated with or occurs at a known rotor position.

6. Method according to any of the preceding claims,
wherein the incremental encoder (127) is mounted on the stator (102) and has an encoder wheel outer surface (129) in contact with and driven by a circular inner surface (126) of the rotor (103),
the encoder wheel outer surface in particular being in contact with and driven by a stiffening ring, in particular brake disc, of the rotor.

7. Method according to any of the preceding claims, wherein the gear ratio (GR) indicates a ratio between an encoder wheel outer surface (129) circumference and a circumference of an annular surface (126) of the rotor (103), in particular stiffening ring of the rotor, with which the encoder wheel outer surface (129) is in contact.

8. Method according to any of the preceding claims,

wherein plural axially spaced apart radially extending cooling ducts (109a) are provided between axially spaced apart laminations (104) of stator (102); and/or
wherein the Hall effect sensor data (169) include binary data which switch at each state change of the Hall effect sensor; and/or
wherein three or more Hall effect sensors (120) are installed at least partly within or at stator cooling ducts, to have phase shift of 30, 60 or 120 electrical degrees; and/or
wherein at least one, in particular the three or more, Hall effect sensor (120) is installed using a holder or bracket at least partially inserted into a radial cooling duct within the stator.

9. Method according to any of the preceding claims, which is performed:

during position control; or
during speed control; or
during torque control; and/or

10. Method according to any of the preceding claims, which is performed at low speed, in particular between 0 and 1 rpm, in particular relating to blade mounting and/or demounting, in particular started from a locked rotor at standstill, the method further comprising:

using a stored rotor position to define an initial angle for the encoder;
in particular checking and/or correcting the thus defined initial angle by the Hall effect sensor measurement data,

the stored rotor position relating to a rotor state when rotor movement stopped previously.

11. Method of controlling an electrical machine (100) having a stator (102) and a rotor (103), in particular permanent magnet synchronous generator, in particular of a wind turbine, the method comprising:

perform a method of determining a rotor position indicating quantity (166) according to any one of the preceding claims;
controlling the machine (100) based on determined rotor position indicating quantity (166), in particular performing rotor positioning applying position, and/or speed, and/or torque control.

12. Arrangement (130) for determining a rotor position indicating quantity (166), in particular rotor angle, of an electrical machine having a stator and a rotor, in particular permanent magnet synchronous generator, in particular of a wind turbine, the arrangement comprising:

an incremental mechanical encoder (127) installed in order to sense relative rotor position;
at least one, in particular at least three, Hall effect sensor (120), in particular binary sensors, installed at the stator, in order to sense magnetic field;
an input port (167) adapted:

to receive encoder measurement data (168) regarding rotor position from the incremental mechanical encoder;
to receiving Hall effect sensor measurement data (169) from the Hall effect sensor;

a processor adapted to determine the rotor position indicating quantity (166) based on the encoder measurement data and the Hall effect sensor measurement data.

13. Controller (150) for controlling an electrical machine (100) having a stator (102) and a rotor (103), in particular permanent magnet synchronous generator, in particular of a wind turbine, the controller comprising:

an arrangement (130) for determining a rotor position indicating quantity according to the preceding claim;
a control module (165) adapted to control the machine based on determined rotor position indicating quantity, in particular performing rotor positioning applying position, speed, and/or torque control.

14. Electrical machine (100), in particular permanent magnet synchronous generator, in particular of a wind turbine, comprising:

a stator (102);
a rotor (103); and
controller (150) according to the preceding claim.

15. Wind turbine (160), comprising:

a hub (161) having plural rotor blades (162) mounted thereon;
an electrical machine (100) according to the preceding claim, wherein the rotor is coupled to the hub.

FIG 1

FIG 2

100

103

126

128

127

FIG 3

132

134

133

131

127

128

129

## FIG 4

## FIG 5

FIG 6

EPO FORM 1503 03.82 (P04C01)

| | Europäisches Patentamt European Patent Office Office européen des brevets | **EUROPEAN SEARCH REPORT** | **Application Number** EP 24 18 6231 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 168 293 A (ZHEJIANG FASHION INSTITUTE TECH) 5 December 2023 (2023-12-05) | 1,2,8-15 | INV. H02P6/16 G01D5/14 |
| Y | * the whole document * ----- | 3-7 | G01D5/26 G01D5/54 |
| Y | EP 4 216 423 A1 (SIEMENS GAMESA RENEWABLE ENERGY AS [DK]) 26 July 2023 (2023-07-26) | 3-7 | G01D5/56 G01D5/58 |
| A | * abstract; figures 1-8 * * paragraph [0004] - paragraph [0066] * ----- | 10,15 | |

| | |
|---|---|
| | TECHNICAL FIELDS SEARCHED (IPC) |
| | H02P G01D |

The present search report has been drawn up for all claims

| Place of search | Date of completion of the search | Examiner |
|---|---|---|
| Munich | 28 November 2024 | Zeng, Wenyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 18 6231

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2024

| Patent document cited in search report | | Publication date | Patent family member(s) | | Publication date |
|---|---|---|---|---|---|
| CN 117168293 | A | 05-12-2023 | NONE | | |
| EP 4216423 | A1 | 26-07-2023 | CN | 118614004 A | 06-09-2024 |
| | | | EP | 4216423 A1 | 26-07-2023 |
| | | | EP | 4441882 A1 | 09-10-2024 |
| | | | WO | 2023143848 A1 | 03-08-2023 |

EPO FORM P0459

For more details about this annex : see Official Journal of the European Patent Office, No. 12/82